(19) **Europäisches Patentamt**
**European Patent Office**
**Office européen des brevets**

(11) **EP 2 517 177 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
***G06T 7/20*** *(2006.01)*

(21) Anmeldenummer: **10798343.9**

(86) Internationale Anmeldenummer:
**PCT/EP2010/070699**

(22) Anmeldetag: **23.12.2010**

(87) Internationale Veröffentlichungsnummer:
**WO 2011/076939 (30.06.2011 Gazette 2011/26)**

(54) **VERFAHREN ZUR BESTIMMUNG DER RELATIVBEWEGUNG MITTELS EINER HDR-KAMERA**

METHOD FOR DETERMINING RELATIVE MOTION BY MEANS OF AN HDR CAMERA

PROCÉDÉ DE DÉTERMINATION DU MOUVEMENT RELATIF AU MOYEN D'UNE CAMÉRA HDR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009 DE 102009055269**

(43) Veröffentlichungstag der Anmeldung:
**31.10.2012 Patentblatt 2012/44**

(73) Patentinhaber: **Robert Bosch GmbH**
**70442 Stuttgart (DE)**

(72) Erfinder: **ROUS, Martin**
**71292 Friolzheim (DE)**

(56) Entgegenhaltungen:
- OKAMOTO F ET AL: "A CMOS IMAGER WITH NEW FOCAL-PLANE MOTION DETECTORS", 1999 SYMPOSIUM ON VLSI CIRCUITS. DIGEST OF TECHNICAL PAPERS. KYOTO, JUNE 17 - 19, 1999; [SYMPOSIUM ON VLSI CIRCUITS], NEW YORK, NY : IEEE, US, Bd. CONF. 13, 17. Juni 1999 (1999-06-17), Seite 139/140, XP000894788, ISBN: 978-0-7803-5441-8
- MACELO CELESTINO ET AL: "VELOCITY MEASUREMENT BASED ON IMAGE BLUR", ABCM SYMPOSIUM SERIES IN MECHATRONICS - PROCEEDINGS, BRAZILIAN SOCIETY OF MECHANICAL SCIENCES AND. ENGINEERING, Bd. 3, 1. Januar 2008 (2008-01-01), Seiten 633-642, XP007917830,
- RHEE JEHYUK ET AL: "Wide dynamic range CMOS image sensor with pixel level ADC", ELECTRONICS LETTERS, IEE STEVENAGE, GB, Bd. 39, Nr. 4, 20. Februar 2003 (2003-02-20), Seiten 360-361, XP006019873, ISSN: 0013-5194, DOI: DOI:10.1049/EL:20030246

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Es ist bereits bekannt, ein Bildaufnahmesystem in einem Kraftfahrzeug einzusetzen, um Bilder des Fahrzeugumfelds zu gewinnen, und, um in Verbindung mit einem Fahrerassistenzsystem, die Führung des Fahrzeugs zu erleichtern. Ein derartiges Bildaufnahmesystem umfasst wenigstens einen Bildsensor und ein diesem Bildsensor zugeordnetes optisches System, das ein Aufnahmefeld des Fahrzeugumfelds auf den Bildsensor abbildet. Der bei einem derartigen Bildaufnahmesystem verwendete Bildsensor muss einen weiten Bereich von unterschiedlichen Beleuchtungsstärken verarbeiten, um einerseits in praller Sonne und andererseits in spärlich beleuchteten Tunnels noch ein brauchbares Ausgangssignal liefern zu können. Während bei einem herkömmlichen Bildsensor die Belichtungsempfindlichkeit häufig einer fest eingestellten linearen oder logarithmischen Kennlinie folgt, wurden bereits auch schon Bildsensoren vorgeschlagen (DE 103 01 898 A1 und DE 10 2006 027 121 A1), bei denen diese Kennlinie in einzelnen linearen Abschnitten individuell einstellbar ist. Eine derartige Kennlinie setzt die absolute Helligkeit eines Objekts und den Grauwert in dem von dem Objekt gewonnenen Bild in Beziehung.

Aus dem Aufsatz "Velocity measurement based on image blur" von M. Celestiono und O. Horikawa in ABCM Symposium Series in Mechatronics, Vol. 3, pp. 633-642, 2008, ist es weiterhin bekannt, die Geschwindigkeit eines Fahrzeugs über Grund zu messen, um die Funktionsfähigkeit des Tachometers zu überprüfen. Dazu wird mit einem fahrzeugfesten Bildsensor ein Bild des von dem Fahrzeug befahrenen Straßenstücks erfasst und das erfasste Bild mit einem zuvor aufgenommenen Bild verglichen. Aus dem geschwindigkeitsabhängig verschmierten Bild wird eine Geschwindigkeitsinformation abgeleitet.

Offenbarung der Erfindung

Die Erfindung definiert sich durch ein Verfahren und eine Vorrichtung gemäß der unabhängigen Ansprüche 1 und 8.

Es wird ein verbessertes Verfahren (und Vorrichtung) für die Erfassung eines Objekts, insbesondere im Verkehrsraum eines Fahrzeugs, vorgeschlagen, das es ermöglicht, die Relativbewegung (Relativgeschwindigkeit und/oder relative Bewegungsrichtung) eines Objekts im Bild bezogen auf die Bewegung der Kamera (z.B. zwischen einem Egofahrzeug und Objekten in dem Verkehrsraum) schneller als bisher festzustellen, da bereits aus einem Bild (Frame) die Bewegung ermittelt werden kann und nicht mehr wenigstens 2 Bilder benötigt werden.

Unter der Bewegung (z.B. eines Fahrzeugs) wird dessen Geschwindigkeit und Richtung verstanden.

Diese stellen somit Bewegungsparameter dar. Analog gilt, dass eine Bewegungsänderung aus einer Richtungsänderung und/oder einer Geschwindigkeitsänderung besteht. Selbstverständlich kann ein Bewegungsparameter oder dessen Ableitung (die Änderung des Bewegungsparameters) auch den Wert Null besitzen. In diesem Fall würde die Bewegung(sänderung) sinngemäß nur aus z. B. der Geschwindigkeit(sänderung) oder Richtung(sänderung) beschreibbar sein.

Als Anwendungsfall für die schnellere Erfassung der Relativbewegung kann beispielsweise die Notwendigkeit dienen, möglichst schnell beurteilen zu müssen, ob ein Unfallrisiko besteht, weil aufgrund von Position und Relativgeschwindigkeit eines Objekts beispielsweise ein Kollisionsrisiko nicht ausgeschlossen werden kann. Dadurch können rechtzeitig Gegenmaßnahmen ergriffen werden, um das Risiko zu vermindern.

Das erfindungsgemäße Verfahren ist sehr genau, da durch scharf abgegrenzte Kanten (wird unten erläutert) im Bild z.B. inkrementelle Positionsbestimmungen von Objekten deutlicher möglich sind, als z.B. durch Verfahren, die mit Bewegungsunschärfe arbeiten.

Weitere Vorteile ergeben sich aus den Unteransprüchen, der Beschreibung und der Zeichnung.

Beschreibung der Zeichnungen

Die Erfindung, sowie Ausführungsbeispiele werden im Folgenden unter Bezug auf die Zeichnungen näher erläutert. Dabei zeigt

Figur 1    das Abbild eines erfassten Objekts aus dem Verkehrsraum;

Figur 2    eine vergrößerte Darstellung eines Teilbereichs des erfassten Objekts;

Figur 3    eine charakteristische Kennlinie des Bildsensors eines Bildaufnahmesystems.

Für die Bewegungsanalyse von Bildern eines Bildaufnahmesystems wird bisher eine aus mehreren Bildern bestehende Bildsequenz betrachtet, um daraus die Bewegung eines Objekts aus dem Fahrzeugumfeld, insbesondere seine Relativgeschwindigkeit, zu bestimmen. Dabei wird ein so genannter Bewegungsvektor ermittelt, der die Bewegung in der betrachteten Bildsequenz in Bildkoordinaten (Pixeln) angibt. Ist die Framerate als Zeitkonstante bekannt, dann kann daraus eine Relativbewegung über mehrere Bilder geschätzt werden. Die Genauigkeit mit der die Relativbewegung bestimmt werden kann, ist hier abhängig von der Pixelauflösung (Granularität).

Mittels Bildern aus einer HDR-Kamera (HDR = High Dynamic Range), deren Bildsensor üblicherweise eine stückweise linearen Kennlinienstruktur aufweist, die eine logarithmische Kennlinie approximiert, kann ein neues, hier beschriebenes, Verfahren verwendet werden, um eine Abschätzung der Relativbewegung durch Aufnahme nur eines einzigen Bildes zu ermöglichen. Erfindungsgemäß ist entscheidend, dass die Kennlinie der Kamera zumindest einen oder mehrere Knickpunkte (d.h. nicht differenzierbare Stellen) aufweist.

Eine HDR-Kamera funktioniert beispielsweise wie folgt:

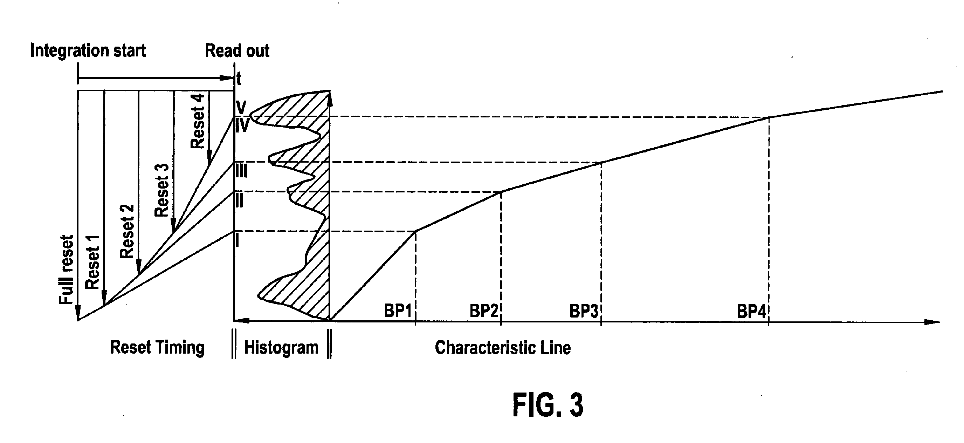

Während der Belichtungszeit ("Integration Start" bis "Read Out" (dem Auslesen des Pixelwertes (Helligkeit)) werden verschiedene Resetzeitpunkte gesetzt. Bei Auftreten eines Resets werden alle lichtempfindlichen Elemente (Pixel), die einen bestimmten definierten Helligkeitswert überschritten haben (d.h. deren Potenzial in Sättigung (Überbelichtung) zu drohen geht) auf einen bestimmten konstanten Wert zurückgesetzt. Abhängig von der Nummer des Resets (in der Figur 3 sind es 4 Stück) ist der konstante Wert, auf den zurückgesetzt wird unterschiedlich (in aufsteigender Reihenfolge) und entspricht den Stufen römisch I bis IV.

Unter der Annahme, dass die Lichteinwirkung (Lichtmenge) während der gesamten Belichtungszeit gleich bleibt und sich nicht zwischen den Resetzeitpunkten ändert, erhält man trotz des Rücksetzens der Pixel unterschiedlichen Potenzials auf den gleichen Wert eine unterschiedliche Intensität, entsprechen der Kennlinie, da nach dem letzten Reset die unterschiedliche Lichteinwirkung weiter wirken kann und beim endgültigen Auslesen dann sichtbar wird.

Für die Erfindung ist es unerheblich ob während der Belichtung der Potenzialtopf der Pixel gefüllt wird oder - invers - geleert wird.

Erkennt man jedoch, dass Bewegungen im Bild während der Belichtungszeit gerade dazu führen, dass die obige Annahme der gleichmäßigen Lichteinwirkung nicht mehr gilt, so entsteht folgender Effekt, der erfindungsgemäß genutzt werden kann:

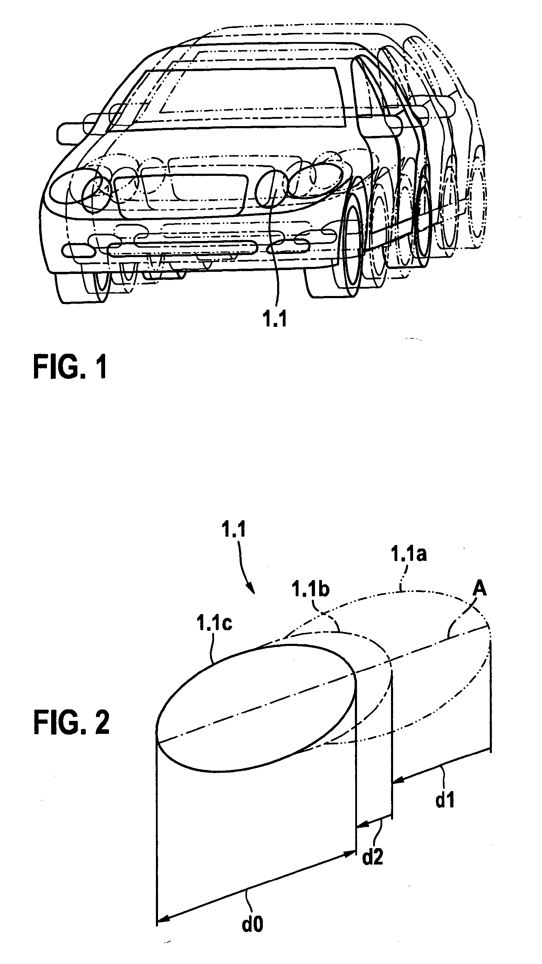

Das sich relativ bewegende Objekt (hier im Beispiel der Scheinwerfer 1.1) belichtet in der Zeit zwischen Belichtungsbeginn und Reset 1 die Pixel der Kamera an der Position 1.1a. Durch die hohe Lichtintensität der Scheinwerfer wird zum Zeipunkt des ersten Resets der Pixel auf ein Niveau BP1 abgesenkt. Im Zeitraum bis zum nächsten Reset belichtet der Scheinwerfer die Pixel an der Position 1.1b. Der zweite Reset führt zur Absenkung des Pixelwertes auf das Niveau BP2, welches höher ist und der Bereich 1.1b im Bild damit heller als der Bereich 1.1a erscheint. Gleiches gilt für den 3. Reset, der zu einem noch helleren Bereich 1.1c führt, da das dort abgesenkte Niveau BP3 noch höher liegt. Als Effekt entstehen die in der Figur 2 sichtbaren Kanten, bzw. Treppenstufen zwischen den Bereichen (1.1a,b,c) mit gleicher (und ggf. konstanter) Helligkeit. Im letzten Bereich (1.1c) würde u.U. zwar eine größere Helligkeit als in 1.1b sichtbar sein, wenn dieser Bereich nach dem letzten Reset (unmittelbar vor dem Auslesen) belichtet worden ist, dann würde aber keine konstante Helligkeit vorhanden sein (außer wenn der Bereich dennoch Überbelichtet würde). Dies gilt nicht unbedingt bei homogenen Lichtquellen, da dann auch der gleiche Grauwert in einem Bildbereich vorliegen kann, wenn keine Überbelichtung vorliegt.

Damit das Verfahren funktioniert, muss die Helligkeit eines Objekts so groß sein, dass zu wenigstens einem Zeitpunkt, der Helligkeitswert der Pixel so groß ist, dass bei wenigstens einem Reset eine Rücksetzung erfolgt, d.h. dieser über der Helligkeitschwelle BP1 liegt. Dies ist bei selbst leuchtenden Objekten oft der Fall. Im automobilen Umfeld sind das z.B. Scheinwerfer anderer Fahrzeuge. Gerade deren Bewegung soll für viele Anwendungen bevorzugt bestimmt werden, mehr als für andere, insbesondere weniger gefährliche (kollisionsträchtige) oder stationäre Objekte.

Nun kann man die Ausdehnung der Bereiche konstanter Helligkeiten (1.1a,b,c) im Bild auf den jeweiligen Helligkeitsniveaus BPx messen, bzw. exakter formuliert die Abstände der Helligkeitsübergänge (Kanten) was im Beispiel zu den Abständen d0, d1, d2 führt. Das Verhältnis der Abstände entspricht dabei dem Verhältnis der zeitlichen Abstände der Resetzeitpunkte. Da daher der zurückgelegte Weg (z.B. d1) zwischen zwei Resetzeitpunkten (z.B. "Integration start" bis Reset 1) bekannt ist, kann mittels der bekannten Formel

$$v = \frac{d}{\Delta t_{reset}}$$ die Geschwindigkeit des Objekts bestimmt werden. Hierbei wird eine lineare, gleichförmige Bewegung des Objekts angenommen, was bei den üblicherweise kurzen Belichtungszeiten ausreicht.

Mit dem Wissen über die bekannte Gestalt der Kennlinie erhält man die Zeitpunkte BP1, BP2, BP3, BP4 innerhalb eines Bildes des Bildsensors, die den Zeitpunkten der Resetimpulse der Knickpunkte der Kennlinie entsprechen. Je nach Anzahl der Knickpunkte (Breakpoints, Kneepoints) ergibt sich dabei sogar die Möglichkeit der Verifizierung oder Plausibilisierung des bestimmten Werts der Relativgeschwindigkeit. Hierbei kann entsprechend der Anzahl der Resetpunke mal das beschriebene Verfahren durchgeführt und die Geschwindigkeit berechnet werden. Die Ergebnisse müssten bei gleichförmiger Bewegung identisch sein, wenn nicht optische Effekte oder andere Objekte/Lichtquellen eine Störung verursachen.

Anspruchsgemäß gilt auch der Ursprung der Kennlinie, also dem Belichtungsbeginn (Full Reset) als Knickpunkt, d.h. das erfindungsgemäße Verfahren kann auch mit der zeitlichen Differenz zwischen Belichtungsbeginn und erstem Reset durchgeführt werden.

Die Ausdehnung der Bereiche konstanter Helligkeiten bezieht sich auf mögliche Ausdehnung in alle Richtungen in der Bildebene. Zur Anwendung des Verfahrens wird üblicherweise eine Vorzugsrichtung bestimmt und die Abstände des Bereichs konstanter Helligkeit in dieser Richtung bestimmt. Vorzugsrichtung ist die Richtung mit der Größten Abstand der Gesamtausdehnung aller Abbildungsteile des Objekts zusammen (d.h. Obermenge von 1.1a + 1.1b + 1.1c). Das ist die Richtung in der dich das Objekt in der Bildebene bewegt. Diese Richtung ist auch für die Abstände in Fig. 2 gewählt.

Natürlich ist auch eine Auswertung in einer anderen Richtung möglich oder eine Auswertung mehrerer Richtungen, z.B. einer in x- und einer in y-Richtung, so dass man sogleich eine Aufteilung in den x- und y-Bewegungsanteil erhält.

Als Erweiterung der erfindungsgemäßen Idee kann bei Existenz mehrerer Abstandsverhältnisse (d1, ..., dn) (nicht von d0 ausgehend, da d0 das Ausmaß der Lichtquelle selbst ist) im Bild anstatt der Plausibilisierung auch eine Erkennung einer Bewegungsänderung des Objekts (unter Berücksichtigung einer möglichen Bewegungsänderung der möglicherweise bewegten Kamera) durchgeführt werden.

Die folgende Figurenbeschreibung bezieht sich explizit auf das Beispiel einer Anwendung für ein Fahrzeug. Die Anwendungsmöglichkeiten sind jedoch nicht darauf beschränkt sondern vielfältig, als weitere Beispiele kommen infrage: Personenbewegungserkennung, Personenüberwachungssysteme, Erkennung von Bewegung auf Förderbändern. Die notwendige Kamera kann in bordgebundenen, bzw. auch stationären Systemen zum Einsatz kommen. Der Ort der Bildauswertung muss nicht dem der Kamera entsprechen und kann z.B. in räumlich getrennten Rechnern stattfinden.

Figur 1 zeigt eine mit einem bordgebundenen Bildaufnahmesystem des nicht dargestellten Egofahrzeugs aufgenommene Szene aus dem Fahrzeugumfeld des Egofahrzeugs. Das in der Dunkelheit aufgenommene Bild zeigt ein von dem Bildaufnahmesystem erfasstes Objekt aus dem Fahrzeugumfeld des Egofahrzeugs, nämlich ein sich relativ zu dem Egofahrzeug bewegendes Fremdfahrzeug, dessen Konturen infolge der Bewegungsunschärfe verwischt sind. Das Fremdfahrzeug fährt mit eingeschaltetem Fahrlicht. Betrachtet wird im Folgenden nur der von dem Bildaufnahmesystem des Egofahrzeugs erfasste Scheinwerfer 1.1 des Fremdfahrzeugs. Das von dem Bildsensor des Bildaufnahmesystems erfasste Bild dieses Scheinwerfers 1.1 ist in Figur 2 vergrößert dargestellt. Die Strecke d0 stellt die Ausdehnung dieser Lichtquelle entlang einer Achse A dar. Zu einem ersten Zeitpunkt t1 befand sich der als Lichtquelle erfasste Scheinwerfer 1.1 an der Position 1.1a. Zu einem zweiten Zeitpunkt t2 befand sich der Scheinwerfer an der Position 1.1b. Zu einem dritten Zeitpunkt t3 befand sich der Scheinwerfer 1.1 an der Position 1.1c. In dem Zeitintervall t1-t2 wurde das Abbild des Scheinwerfers 1.1 also um den Weg d1 versetzt. In dem weiteren Zeitintervall t2-t3 wurde das Abbild des Scheinwerfers 1.1 also um den Weg d2 versetzt. Da üblicherweise das Bildaufnahmesystem das Fahrzeugumfeld des Egofahrzeugs mit einer Bildfolgefrequenz von beispielsweise 25 Bildern pro Sekunde erfasst, erfolgt die Aufnahme eines einzigen Bildes in etwa 40msec. Aus der Länge des Wegs d1 und der Zeitdauer für das Zurücklegen dieses Wegs d1 lässt sich somit die Bewegung des den Scheinwerfer 1.1 tragenden Fremdfahrzeugs ableiten. Eine analoge Ableitung ist durch Auswertung des Wegs d2 möglich. Dadurch ist eine Plausibilitätsprüfung des zuerst ermittelten Messwerts für die Fahrzeugbewegung möglich. Bei dieser Betrachtung wird unterstellt, dass das Fremdfahrzeug während der Zeit für den Aufbau eines einzigen Bildes, also während etwa 40msec, keine wesentliche Änderung seiner Bewegung erfahren hat.

Zur effektiven Bestimmung der Relativbewegung ist es notwendig, dass ein von dem Bildsensor des bordeigenen Bildaufnahmesystems erfasstes Objekt aus dem Fahrzeugumfeld eine helle Bildstruktur hat, die eine Berechnung entlang der Ausdehnung des Objekts in den Knickpunkten der Kennlinie ermöglicht.

Als vorteilhafte weitere Anwendung ist die Bestimmung der Bewegungsunschärfe (Motion Blur) zu sehen. Mit der bekannten Struktur der jeweils eingesetzten Kennlinie kann die Bestimmung der Bewegungsunschärfe verifiziert werden. Insbesondere die Bewegungsrichtung kann aus der hauptsächlichen Richtung der Bewegungsunschärfe abgeleitet werden.

Durch das erfindungsgemäße Verfahren der Bestimmung der Bewegung eines Objekts, kann die Richtung, Geschwindigkeit und/oder der Grad (Stärke) bestimmt werden, durch die ggf. auch Bewegungsunschärfe im Bild hervorgerufen wird. Dieses Wissen kann z.B. dazu dienen, Filter (auf die Bilddaten) anzuwenden, die z.B. Unschärfe reduzieren. Diese Filter können nunmehr mit geeigneten Parametern aus den erfindungsgemäßen Ergebnissen gespeist werden und somit ein besseres Resultat liefern.

Figur 3 ist eine Darstellung des Zusammenhangs der Ansteuerung des Bildsensors des Bildaufnahmesystems und der daraus resultierenden Gestalt der Kennlinie. In dem linken Bereich der Darstellung ist die Zeitsteuerung des Bildsensors wiedergegeben. Gezeigt sind fünf Aufnahmeintervalle, die jeweils durch Resetzeitpunkte Full Reset, Reset 1, Reset 2, Reset 3, Reset 4 voneinander getrennt sind. In dem mittleren Bereich der Darstellung sind die in den Aufnahmeintervallen ermittelten Grauwerte als Histogramm wiedergegeben. In dem rechten Bereich der Darstellung ist die Kennlinie des Bildaufnahmesensors wiedergegeben, wobei die Abszisse den ursprünglichen (optischen) Grauwert (Relinearized Greyvalue) und die Ordinate den komprimierten Grauwert (Compressed Greyvalue), also den aus dem Bildsensor ausgelesenen (digitalisierten) darstellt.

Die Kennlinie setzt die absolute (echte) Helligkeit eines Objekts mit dem Grauwert in dem von dem Objekt gewonnenen Bild in Beziehung. Dadurch, dass die Kennlinie abschnittsweise linear mit unterschiedlichen Steigungen der Abschnitte ist, entstehen unterschiedliche Belichtungszeiten für entsprechende Objekthelligkeiten. Mit jedem zusätzlichen Knick in der Kennlinie steigt die Kompression des ursprünglichen Grauwerts in Abbildung auf den digitalisierten.

Die Anzahl der Knickpunte/Resets in dieser Figur 3 ist höher, als sie der Abbildung des in Fig. 2 gezeigten Objekts entspricht. Für letztere wären lediglich Full Reset, Reset 1, Reset 2 und Read out notwendig. Entsprechend dieser Figur wären die zeitlichen Abstände zwischen Reset 1 und 2 kleiner als zwischen Full Reset und Reset 1, da die zugehörige Ausdehnung von d2 kleiner als die von d1 ist. Dies gilt für angenommene gleichförmige Bewegungen.

Würde dieses Bild (Fig. 2) aufgenommen werden, bei gleichem zeitlichen Abstand der Resets, so würde das Bild auf eine starke Verzögerung des Objekts während der Aufnahme/Belichtung hinweisen, da im zweiten Zeitraum weniger Weg (d2) zurückgelegt wurde, als Weg (d1) im ersten Zeitraum zurückgelegt wurde.

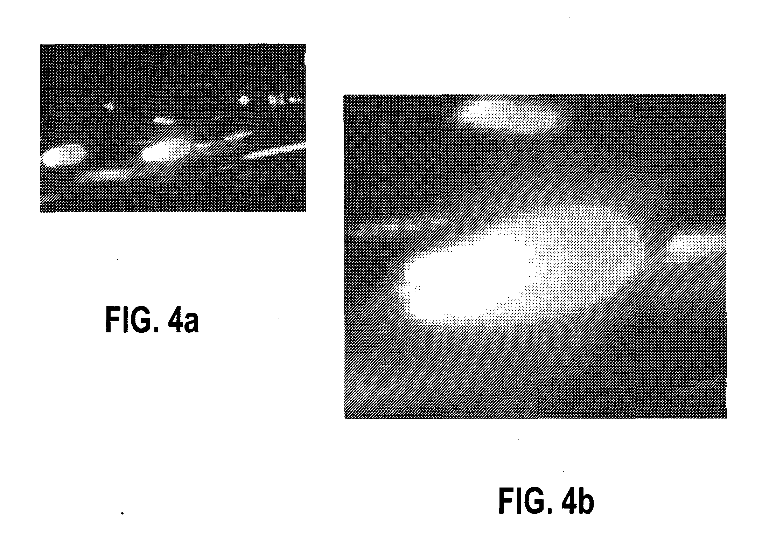

In Figur 4 ist ein von der Kamera aufgenommenes Bild (Figur 4a) gezeigt, die ein Fahrzeug abbildet, dessen Scheinwerfer vergrößert in Figur 4b abgebildet ist. Dieses Bild dient zur Illustration und der geübte Betrachter erkennt die Abstufungen und die Bereiche gleicher Helligkeit, die das erfindungsgemäße Verfahren ermöglichen. In Figur 2 sind die Umrisse der Abstufungen aus Figur 4 gezeigt und die Bestimmung der Bewegungsrichtung und Ausmaße (d0, d1, d2) der Bereiche gleicher Helligkeit.

Weiterhin werden folgende Gegenstände offenbart:

Die Erfassung eines Objekts mit einem einen Bildsensor umfassenden Bildaufnahmesystem, bei dem der Bildsensor eine steuerbare Kennlinie aufweist und der Bildsensor derart gesteuert wird, dass während eines Bildaufbaus unterschiedliche Abschnitte der Kennlinie des Bildsensors wirksam sind, wobei ein Objekt zu einem ersten Zeitpunkt mit einem ersten Abschnitt der Kennlinie des Bildsensors und zu einem zweiten Zeitpunkt mit einem zweiten Abschnitt der Kennlinie des Bildsensors erfasst wird.

In einer weiteren Ausgestaltung wird die Lage des Objekts in dem Bild in dem ersten Zeitpunkt erfasst und die Lage des Objekts in dem Bild in dem zweiten Zeitpunkt erfasst und aus dem Abstand der Bildlagen des Objekts die Relativbewegung des Objekts abgeleitet.

In einer weiteren Ausgestaltung wird die Lage des Objekts in dem Bild in wenigstens einem weiteren dritten Zeitpunkt erfasst und aus dem wenigstens einen weiteren Abstand der Bildlagen des Objekts eine Änderung der Relativbewegung des Objekts abgeleitet.

In einer weiteren Ausgestaltung wird durch Vergleich der in einem ersten Zeitpunkt und einem zweiten Zeitpunkt erfassten Messwerte eine Plausibilisierung der erfassten Messwerte bzw. der von den Messwerten abgeleiteten Größen ermöglicht.

**Patentansprüche**

1. Verfahren für die Erfassung einer Bewegung eines Objekts mit einem einen Bildsensor umfassenden Bildaufnahmesystem welches eine HDR-Kamera umfasst,
   welche derart funktioniert, dass während der Belichtungszeit verschiedene Resetzeitpunkte gesetzt werden und beim Auftreten eines Resets alle lichtempfindlichen Elemente des Bildsensors, die einen bestimmten definierten Helligkeitswert überschritten haben auf einen bestimmten konstanten Wert zurückgesetzt werden,
   wobei während der Belichtung des Bildsensors ein erster (Full Reset) und ein zweiter Reset (Reset 1) mit einem zeitlichem Abstand ausgeführt werden, **dadurch gekennzeichnet, dass**
   aus dem Abbild eines Objekts (1.1)
   eine Ausdehnung (d1) eines Bereichs konstanter Helligkeit gemessen und aus einem Verhältnis der Ausdehnung (d1) zu dem zeitlichen Abstand des ersten und zweiten Resets
   die Bewegung des Objekts ermittelt wird.

2. Verfahren nach Anspruch 1, **dadurch gekennzeichnet, dass** die Bewegung des Objekts aus einem einzigen Bild ermittelt wird.

3. Verfahren nach einem der vorhergehenden Ansprüche, **dadurch gekennzeichnet, dass**
   während der Belichtung (Integration start - Read out) des Bildsensors wenigstens ein dritter Reset (Reset 2) mit einem weiteren zeitlichem Abstand ausgeführt wird und
   wenigstens eine zweite Ausdehnung (d2) eines wenigstens zweiten Bereichs konstanter Helligkeit gemessen und
   aus einem Verhältnis der wenigstens zweiten Ausdehnung (d2) zu dem weiteren zeitlichen Abstand des wenigstens zweiten und dritten Resets die Bewegung des Objekts (1.1) zu einem weiteren Zeitpunkt ermittelt wird und
   daraus eine Änderung der Bewegung des Objekts abgeleitet wird.

4. Verfahren nach Anspruch 1 oder 2, **dadurch gekennzeichnet, dass** während der Belichtung des Bildsensors wenigstens ein dritter Reset mit einem weiteren zeitlichem Abstand ausgeführt wird und wenigstens eine zweite Ausdehnung eines wenigstens zweiten Bereichs konstanter Helligkeit gemessen und
   aus einem Verhältnis der wenigstens zweiten Ausdehnung zu dem weiteren zeitlichen Abstand des wenigstens zweiten und dritten Resets die Bewegung des Objekts zu einem weiteren Zeitpunkt ermittelt wird und bei Annahme einer linearen, gleichförmigen Bewegung des Objekts die Bewegung des Objekts verifiziert wird.

5. Verfahren nach einem der Ansprüche 3 oder 4, **dadurch gekennzeichnet, dass**
die Verfahrensschritte der Ansprüche 3, bzw. 4 entsprechend der Anzahl der Resetpunkte oft durchgeführt werden.

6. Verfahren nach einem der vorhergehenden Ansprüche, **dadurch gekennzeichnet, dass**
die hauptsächliche Richtung der Bewegungsunschärfe abgeleitet wird.

7. Verfahren nach einem der vorhergehenden Ansprüche, **dadurch gekennzeichnet, dass**
das Objekt der Scheinwerfer eines Fahrzeugs ist.

8. Vorrichtung für die Erfassung einer Bewegung eines Objekts mit einem mindestens einen Bildsensor umfassenden Bildaufnahmesystem, welches eine HDR-Kamera umfasst,
welche derart funktioniert, dass eine Kennlinie mit Knickpunkten derart entsteht, dass während der Belichtungszeit verschiedene Resetzeitpunkte gesetzt werden und beim Auftreten eines Resets alle lichtempfindlichen Elemente des Bildsensors, die einen bestimmten definierten Helligkeitswert überschritten haben auf einen bestimmten konstanten Wert zurückgesetzt werden,
**dadurch gekennzeichnet, dass**
Mittel vorgesehen sind, die
aus dem Abbild eines Objekts (1.1)
eine Ausdehnung (d1) eines Bereichs konstanter Helligkeit messen und aus einem Verhältnis der Ausdehnung (d1) zu den zeitlichen Abständen der Knickpunkte
die Bewegung des Objekts ermitteln.

9. Vorrichtung nach Anspruch 8, **dadurch gekennzeichnet, dass** die Kennlinie mindestens zwei Knickpunkte aufweist.

**Claims**

1. Method for detecting a movement of an object using an image recording system which comprises an image sensor and an HDR camera which functions in such a way that different reset instants are set during the exposure time and upon the occurrence of a reset all the light-sensitive elements of the image sensor which have exceeded a specific defined brightness value are reset to a specific constant value, wherein, during the exposure of the image sensor, a first reset (full reset) and a second reset (reset 1) are executed with a time interval, **characterized in that** an extent (d1) of a region of constant brightness is measured from the image of an object (1.1), and the movement of the object is determined from a ratio of the extent (d1) to the time interval between the first and second resets.

2. Method according to Claim 1, **characterized in that** the movement of the object is determined from a single image.

3. Method according to one of the preceding claims, **characterized in that** during exposure (integration start - read out) of the image sensor at least a third reset (reset 2) is executed with a further time interval, and at least a second extent (d2) of an at least second region of constant brightness is measured, and the movement of the object (1.1) at a further instant is determined from a ratio of the at least second extent (d2) to the further time interval between the at least second and third resets, and a change in the movement of the object is derived therefrom.

4. Method according to Claim 1 or 2, **characterized in that** during the exposure of the image sensor at least a third reset is executed with a further time interval, and at least a second extent of an at least second region of constant brightness is measured, and the movement of the object is determined at a further instant from a ratio of the at least second extent to the further time interval between the at least second and third resets, and the movement of the object is verified assuming a linear, uniform movement of the object.

5. Method according to either of Claims 3 and 4, **characterized in that** the method steps of Claims 3 and/or 4 are carried out frequently in accordance with the number of the reset points.

6. Method according to one of the preceding claims, **characterized in that** the main direction of the motion blur is derived.

7. Method according to one of the preceding claims, **characterized in that** the object is the headlamp of a vehicle.

8. Device for detecting a movement of an object using an image recording system which comprises at least one image sensor and an HDR camera which functions in such a way that a characteristic curve with discontinuity points is produced in such a way that different reset instants are set during the exposure time and upon the occurrence of a reset all the light-sensitive elements of the image sensor which have exceeded a specific defined brightness value are reset to a specific constant value, **characterized in that** means are provided which measure from the image of an object (1.1) an extent (d1) of a region of constant brightness, and determine the movement of the object from a ratio of the extent (d1) to the time intervals between the discontinuity points.

9. Device according to Claim 8, **characterized in that** the characteristic curve has at least two discontinuity points.

## Revendications

1. Procédé de détection du déplacement d'un objet à l'aide d'un système d'enregistrement d'image comprenant un capteur d'image et une caméra HDR qui fonctionne de telle sorte que différents instants de réinitialisation sont fixés pendant la durée d'éclairage et que lors d'une réinitialisation, tous les éléments photosensibles du capteur d'image qui ont dépassé une valeur définie de luminosité sont ramenés à une valeur constante définie, une première réinitialisation (Full Reset) et une deuxième réinitialisation (Reset 1) étant réalisées à un écart temporel mutuel pendant l'éclairage du capteur d'image, **caractérisé en ce que** l'étendue (d1) d'une zone de luminosité constante est mesurée dans l'image d'un objet (1.1) et le déplacement de l'objet est déterminé à partir du rapport entre l'étendue (d1) et l'écart temporel qui sépare la première et la deuxième réinitialisation.

2. Procédé selon la revendication 1, **caractérisé en ce que** le déplacement de l'objet est déterminé dans une seule image.

3. Procédé selon l'une des revendications précédentes, **caractérisé en ce que** pendant l'éclairage du capteur d'image (Integration start - Read out), au moins une troisième réinitialisation (Reset 2) est réalisée à un autre écart temporel, au moins une deuxième étendue (d2) d'au moins une ou plusieurs deuxièmes zones de luminosité constante est mesurée et le déplacement de l'objet (1.1) est déterminé à un autre instant à partir du rapport entre la ou les deuxièmes étendues (d2) et l'autre écart temporel entre la ou les deuxièmes et la ou les troisièmes réinitialisations pour ainsi déduire une modification du déplacement de l'objet.

4. Procédé selon les revendications 1 ou 2, **caractérisé en ce que** pendant l'éclairage du capteur d'image, au moins une troisième réinitialisation est exécutée à un autre écart temporel et au moins une deuxième étendue d'une ou des plusieurs deuxièmes zones de luminosité constante est mesurée, le déplacement de l'objet étant déterminé à un autre instant à partir du rapport entre le ou les deuxièmes étendues et le ou le deuxième écart de la ou les deuxièmes réinitialisations et de la ou des troisièmes réinitialisations et le déplacement de l'objet est vérifié au cas où l'objet se déplace de manière linéaire et uniforme.

5. Procédé selon l'une des revendications 3 ou 4, **caractérisé en ce que** les étapes des revendications 3 ou 4 sont exécutées à une fréquence qui correspond au nombre des points de réinitialisation.

6. Procédé selon l'une des revendications précédentes, **caractérisé en ce que** la direction principale des déplacements incertains est déduite.

7. Procédé selon l'une des revendications précédentes, **caractérisé en ce que** l'objet est le phare d'un véhicule.

8. Dispositif de détection du déplacement d'un objet, qui présente au moins un système d'enregistrement d'image qui comporte un capteur d'image qui comprend une caméra HDR et qui fonctionne de telle sorte qu'une ligne caractéristique dotée de points de coude s'établit de telle sorte que différents instants de réinitialisation sont fixés pendant la durée d'éclairage et que lors d'une réinitialisation, tous les éléments photosensibles du capteur d'image qui ont dépassé une valeur définie de luminosité sont ramenés à une valeur constante définie, **caractérisé en ce que** le dispositif présente des moyens qui mesurent une étendue (d1) d'une zone de luminosité constante dans l'image d'un objet (1.1) et déterminent le déplacement de l'objet à partir du rapport entre l'étendue (d1) et les écarts temporels entre les points de coude.

9. Dispositif selon la revendication 8, **caractérisé en ce que** la ligne caractéristique présente au moins deux points de coude.

FIG. 1

FIG. 2

**FIG. 3**

EP 2 517 177 B1

**FIG. 4b**

**FIG. 4a**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10301898 A1

- DE 102006027121 A1

**In der Beschreibung aufgeführte Nicht-Patentliteratur**

- **M. CELESTIONO ; O. HORIKAWA.** Velocity measurement based on image blur. *ABCM Symposium Series in Mechatronics,* 2008, vol. 3, 633-642